Europäisches Patentamt

European Patent Office

Office européen des brevets

(11) Veröffentlichungsnummer: **0 106 032**
**A2**

## EUROPÄISCHE PATENTANMELDUNG

(21) Anmeldenummer: 83107129.5

(22) Anmeldetag: 21.07.83

(51) Int. Cl.³ **G 01 B 5/00**

(30) Priorität: 17.09.82 DE 3234470

(43) Veröffentlichungstag der Anmeldung: 25.04.84
Patentblatt 84/17

(84) Benannte Vertragsstaaten: AT CH DE FR GB IT LI NL SE

(71) Anmelder: Dr. Johannes Heidenhain GmbH,
Nansenstrasse 17, D-8225 Traunreut (DE)

(72) Erfinder: Feichtinger, Kurt, Katzwalchen 26,
D-8221 Palling (DE)

(54) Mehrkoordinaten-Tastkopf.

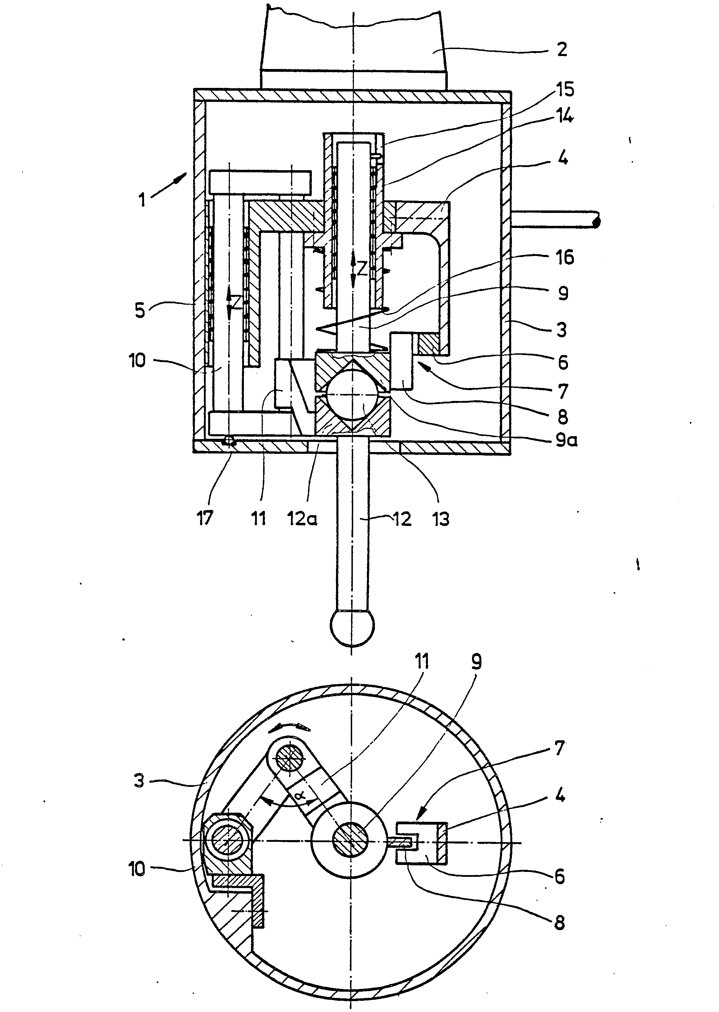

(57) Bei diesem Mehrkoordinaten-Tastkopf wird die Auslenk-bewegung des Taststiftes (12) mit Hilfe einer Kugel (13), die beweglich zwischen zwei 90°-Konen (9a, 12a) gehalten wird, immer im Verhältnis 1:1 in eine axiale Bewegung eines Stößels (9) umgesetzt, der einen einzigen Signalgeber (7) beauf-schlagt. Dabei ist es gleichgültig, in welcher Richtung die Anta-stung eines Werkstückes erfolgt. Der Taststift (12) wird durch eine axiale Führung (14) und durch eine ebene Führung (10, 11) immer nur parallel zu seiner Achse versetzt. Durch die Aus-bildung eines Gelenkes des einen Gelenkhebels (10) als Axial-führung ist eine gleichzeitig radiale und axiale Auslenkung des Taststiftes.(12) möglich (Fig. 1).

- 1 -

DR. JOHANNES HEIDENHAIN GMBH    16. September 1982

Mehrkoordinaten-Tastkopf
============================

Die Erfindung bezieht sich auf einen Mehrkoordinaten-Tastkopf nach dem Oberbegriff des Anspruches 1.

Eine Vielzahl von Druckschriften befaßt sich mit
Mehrkoordinaten-Tastköpfen zum Antasten von Werkstücken aus verschiedenen Richtungen.

So ist aus der DE-AS 19 32 010 ein Mehrkoordinaten-
Tastkopf bekannt, bei dem der Taststift in einem
Kugelgelenk im Innern des Gehäuses gelagert ist.
Eine beliebige Auslenkung des Taststiftes wird
über eine spezielle Nockenfolgeeinrichtung mit
Übersetzungskonus auf einen Meßwandler übertragen.
Bei Auslenkungen des Taststiftes senkrecht zu
seiner Achsrichtung wird der Taststift um das
Kugelgelenk geschwenkt und nimmt einen Winkel zur
Achsrichtung ein. Derartig winkelbewegliche Taststifte sind zur Messung räumlicher Konturen dann
ungeeignet, wenn enge Bohrungen oder andere innen
im Werkstück liegende Konturen gemessen werden
sollen, wenn dort für einen geschwenkten Taststift
kein Raum ist.

- 2 -

Es sind daher auch Mehrkoordinaten-Tastköpfe bekannt, bei denen der Taststift axial und im
wesentlichen in einer Ebene senkrecht dazu auslenkbar sind, d. h. daß der Taststift nicht geschwenkt, sondern parallel zu seiner Achse versetzt wird. In der DE-PS 22 42 355 ist zu diesem
Zweck eine Aneinanderreihung von Geradführungssystemen zur Aufhängung des Taststiftes vorgesehen. Die dort gezeigte Lösung ist baulich aufwendig, da ein hoher fertigungstechnischer Aufwand erforderlich ist, um die voneinander abhängigen Geradführungssysteme genau genug herzustellen. Zudem sind dort mehrere lage- und richtungsempfindliche Signalgeber vorgesehen, die für
sich wieder ein räumliches Koordinatensystem bilden. Ein derartige Vielzahl von Signalgebern ist
für einfache Meßaufgaben an schwierigen Werkstückkonturen nicht immer erforderlich.

Der Erfindung liegt die Aufgabe zugrunde, einen
Mehrkoordinaten-Tastkopf der eingangs genannten
Art zu schaffen, der auch bei komplizierten Werkstückkonturen einsetzbar ist, kostengünstig herstellbar und robust ist.

Diese Aufgabe wird von einem Tastkopf gelöst, der
durch die kennzeichnenden Merkmale des Anspruches 1
bestimmt ist.

Die besonderen Vorteile des erfindungsgemäßen Tastkopfes liegen in dem verhältnismäßig einfachen
konstruktiven Aufbau, der geringen Anzahl von
Einzelteilen, die zudem einfache, d. h. kostengünstige Bauelemente sind, die jedoch in der ge-

- 3 -

zeigten Zusammenfügung eine beachtliche Genauigkeit des Tastkopfes gewährleisten.

Weitere vorteilhafte Ausgestaltungen ergeben sich aus den Unteransprüchen.

Mit Hilfe der Zeichnungen soll anhand eines Ausführungsbeispieles die Erfindung noch näher erläutert werden.

Es zeigen

        Figur 1  eine schematische Schnittdarstellung eines Tastkopfes,

        Figur 2  einen vereinfachten Schnitt entlang der Linie I-I in Figur 1.

Ein Tastkopf 1 weist einen Aufnahedorn 2 auf, mit dessen Hilfe er in der nicht dargestellten Spindel einer Meß- oder Bearbeitungsmaschine befestigt werden kann. Im Innern eines den Tastkopf 1 bildenden Gehäuses 3 befindet sich eine starre Brücke 4, die als Aufnahme für eine Präzisionskugelführung 5 dient, und an anderer Stelle eine Abtasteinrichtung 6 einer photoelektrischen Längenmeßeinrichtung 7 trägt. Die Abtasteinrichtung 6 tastet eine als Gitter ausgebildete Maßverkörperung 8 ab, die an einem Stößel 9 fest angebracht ist, der das letzte Getriebeglied eines Gelenkgetriebes 9, 10, 11 und 12 darstellt. Weitere Getriebeglieder sind ein Gelenkhebel 10, dem ein weiterer Gelenkhebel 11 nachgeordnet ist. Der Gelenkhebel 11 ist am Taststift 12 starr befestigt. Der Stössel 9 und der Taststift 12 liegen in einer Achse hintereinander. Die einander zugewandten Enden

- 4 -

des Stößels 9 und des Taststiftes 12 tragen jeweils einen 90°-Konus 9a bzw. 12a, zwischen denen beweglich eine Kugel 13 angeordnet ist. Der Stössel 9 ist verschiebbar in einer Axialführung 14 gehalten, die als Präzisionskugelführung ausgebildet ist. Eine Verdrehsicherung 15 verhindert die Drehung des Stößels 9 und eine Feder 16 drückt den Stößel 9 und im Zusammenwirken mit der Kugel 13 und den Konen 9a, 12a auch den Taststift 12 in eine stabile Ausgangslage, die in Z-Richtung durch einen kugeligen Anschlag 17 bestimmt ist.

Bei Werkstückantastung in Z-Richtung wird der Taststift 12 in seiner Achse verschoben, die Taststiftauslenkung wird durch die Kugel 13 auf den Stößel 9 übertragen, der in der Präzisionskugelführung axial auswandert, die Maßverkörperung 8 mitnimmt, so daß die Längenmeßeinrichtung 7 durch ihre Abtasteinrichtung 6 ein der Taststiftauslenkung proportionales Signal erzeugt. Wird die Werkstückantastung rückgängig gemacht, so drückt die Feder 16 den Taststift 12 wieder in seine stabile Ausgangslage.

Bei Werkstückantastung in einer zur Z-Achse senkrechten Ebene wird der Taststift 12 parallel zu seiner Achse versetzt. Dabei gelangen die beiden Gelenkhebel 10 und 11 zur Wirkung, da sich bei derartigen Taststiftauslenkungen der Winkel verändert. In der Ausgangslage schließen die beiden Gelenkhebel 10 und 11 einen Winkel $\alpha$ von etwa 60° ein. Bei radialen Taststiftauslenkungen werden die beiden Gelenkhebel 10 und 11 um eine Achse verschwenkt, die mit der Achse der Axialführung 5 zusammenfällt. Diese Axialführung hat deshalb zwei Freiheitsgrade. Der Scheitelpunkt des Winkels wandert bei derartigen Bewegungen ebenfalls aus. Die Achse des Stößels 9 und die Taststiftachse sind nun parallel zueinander versetzt. Dabei wird auch die Kugel 13 aus ihrer Ruhelage ausgelenkt, die wiederum durch Abrollen auf den Mantelflächen der Konen 9a und 12a den Stößel 9 axial verschiebt. Da die Konen jeweils einen 90°-Winkel einschließen, wird der radiale Versatz des Taststiftes 12 im Verhältnis 1:1 auf den axialen Versatz des Stössels 9 übersetzt. Das bedeutet, daß die vom Stössel 9 beaufschlagte Längenmeßeinrichtung 7 immer einen der Taststiftauslenkung proportionalen Meßwert ausgibt, unabhängig davon, ob der Taststift 12 axial oder in einer dazu senkrechten Ebene ausgelenkt wird. Deshalb können bei Änderung der Antastrichtung Umrechnungen oder Umschaltungen oder Veränderungen der Nullage entfallen.

Durch die Maßnahme, daß ein Gelenk des ersten Gelenkhebels 10 gleichzeitig eine Axialführung 5 darstellt, ist auch die gleichzeitige Auslenkung des Taststiftes 12 in axialer als auch in radialer Richtung möglich.

Es versteht sich, daß zur Erzielung der geforderten Genauigkeit und Reproduzierbarkeit die Führungen und Gelenke den Anforderungen entsprechend spiel- und reibungsarm vorzusehen sind, was aber bei den verwendeten Bauelementen umproblematisch ist.

Es liegt im Rahmen der Erfindung, den Signalgeber 7 auf andere Weise, z. B. induktiv oder kapazitiv auszugestalten.

0106032

- 6 -

Ansprüche
=========

1. Mehrkoordinaten-Tastkopf mit einem in mehreren Koordinatenrichtungen auslenkbaren Taststift und mit einem Signalgeber zur Erfassung der Taststiftauslenkung aus einer stabilen Ausgangslage, dadurch gekennzeichnet, daß - unabhängig von der Auslenkrichtung des Taststiftes (12) - zur Erzeugung einer linearen Auslenkung eines den Signalgeber (7) beaufschlagenden, axial geführten Elementes (9) zwischen dem Taststift (12) und dem Signalgeber (7) eine beweglich zwischen zwei 90°-Konen (9a, 12a) aufgenommene Kugel (13) vorgesehen ist, und daß für den Taststift (12) eine weitere axiale Führung (5) und eine dazu senkrechte ebene Führung (10, 11) vorgesehen ist.

2. Mehrkoordinaten-Tastkopf nach Anspruch 1, dadurch gekennzeichnet, daß die ebene Führung (10, 11) durch einen ersten Gelenkhebel (10) und einen nachgeordneten zweiten Gelenkhebel (11) gebildet wird, die einen Winkel $\alpha$ einschließen.

3. Mehrkoordinaten-Tastkopf nach Anspruch 1 und 2, dadurch gekennzeichnet, daß ein Gelenk des ersten Gelenkhebels (10) gleichzeitig die axiale Führung (5) des Taststiftes (12) bildet.

4. Mehrkoordinaten-Tastkopf nach den Ansprüchen 1 und 3, dadurch gekennzeichnet, daß die Axialführungen (5, 14) als Präzisionskugelführungen ausgebildet sind.

- 7 -

5. Mehrkoordinaten-Tastkopf nach Anspruch 1, dadurch gekennzeichnet, daß eine Feder (16) vorgesehen ist, die im Zusammenwirken mit den beiden 90°-Konen (9a, 12a) und der Kugel (13) eine Rückstelleinrichtung für die stabile Ausgangslage des Taststiftes (12) bildet.

6. Mehrkoordinaten-Tastkopf nach Anspruch 1, dadadurch gekennzeichnet, daß der Signalgeber (7) als photoelektrische Längenmeßeinrichtung ausgebildet ist.

0106032
1/1